# EUROPEAN PATENT APPLICATION

(11) **EP 3 188 306 A1**
(43) Date of publication of application: **05.07.2017**
(21) Application number: 15837357.1
(22) Date of filing: 03.09.2015
(51) Int. Cl.: H01M 12/08, H01M 12/02

(54) **LITHIUM-AIR BATTERY AND METHOD FOR MANUFACTURING SAME**

(30) Priority: 03.09.2014 KR 20140117325
(71) Applicant: IUCF-HYU (Industry-University Cooperation Foundation Hanyang University), Seoul 04763 (KR)
(72) Inventor: SUN, Yangkook, Seoul 06284 (KR); PARK, Jinbeom, Daegu 42680 (KR); KWAK, Wonjin, Seoul 04763 (KR)
(74) Representative: Prüfer & Partner mbB Patentanwälte · Rechtsanwälte
(86) International application number: PCT/KR2015/009326
(87) International publication number: WO 2016/036175

(57) **Abstract**

A lithium-air battery according to embodiments of the inventive concepts includes a negative electrode including a lithium metal, a positive electrode using oxygen as a positive electrode active material, a non-aqueous electrolyte disposed between the negative electrode and the positive electrode and including lithium iodide (LiI), and a separator disposed between the positive electrode and the negative electrode. Lithium hydroxide (LiOH) is produced as a discharge product at the positive electrode by iodine (I) of LiI included in the non-aqueous electrolyte.

## Description

### BACKGROUND

### 1. Field

Embodiments of the inventive concepts relate to a lithium-air battery and a method for manufacturing the same and, more particularly, to a lithium-air battery using a non-aqueous electrolyte including lithium iodide (LiI) and a method for manufacturing the same.

### 2. Description of the Related Art

A lithium-air battery is a battery system that uses a metal (e.g., lithium) as a negative electrode and uses oxygen in air as an active material of a positive electrode under the presence of a carbon carrier. Since oxygen included in the air is used as a positive electrode material corresponding to an important component of the battery, a weight of the battery can be markedly reduced. In addition, since the metal such as lithium is used in the negative electrode, the capacity of the battery can be increased. Thus, the lithium-air battery is being spotlighted.

In particular, the lithium-air battery is more environmentally friendly than a lithium ion battery. Therefore, methods for improving stability and charge/discharge characteristics of the lithium-air battery have been actively studied to apply the lithium-air battery to various fields such as automobiles and energy storage devices.

For example, Korean Patent Publication No. KR20150079488A (Applicant: SK innovation, Application No. KR20147014264A) discloses a lithium-air battery system that includes a lithium-air battery, a gas inflow pipe into which a mixture of air and an electrolyte solvent evaporated from the lithium-air battery flows, a reaction part which includes an inner space part and which is connected to the gas inflow pipe to receive the mixture of the electrolyte solvent vapor and the air in the inner space part, an electrolyte solvent filtering part which is provided in the reaction part to separate the electrolyte solvent from the mixture of the electrolyte solvent vapor and the air, and an electrolyte solvent collecting device. The electrolyte solvent collecting device includes a collecting part which is connected to the inner space part of the reaction part and which is formed under the reaction part, a transfer pipe which transfers the electrolyte solvent collected in the collecting part to the lithium-air battery, and a check valve. According to Korean Patent Publication No. KR20150079488A, the lithium-air battery system includes the electrolyte solvent collecting device capable of collecting the electrolyte solvent evaporated in the lithium-air battery, and thus stability of the lithium-air battery can be improved.

To commercialize the lithium-air battery, there is a need for methods for improving charge/discharge efficiency and a lifetime of the battery and for reducing a manufacture cost of the battery.

### SUMMARY

Embodiments of the inventive concepts may provide a lithium-air battery with improved charge/discharge efficiency and a method for manufacturing the same.

Embodiments of the inventive concepts may also provide a lithium-air battery with an improved lifetime and a method for manufacturing the same.

Embodiments of the inventive concepts may further provide a lithium-air battery capable of reducing a manufacture cost and a method for manufacturing the same.

Embodiments of the inventive concepts may not restrict as described.

Embodiments of the inventive concepts may provide a lithium-air battery.

In an aspect, a lithium-air battery may include a negative electrode including a lithium metal, a positive electrode using oxygen as a positive electrode active material, a non-aqueous electrolyte disposed between the negative electrode and the positive electrode and including lithium iodide (LiI), and a separator disposed between the positive electrode and the negative electrode. Lithium hydroxide (LiOH) may be produced as a discharge product at the positive electrode by iodine (I) of LiI included in the non-aqueous electrolyte.

In some embodiments, the non-aqueous electrolyte may react with lithium ions (Li⁺) at the positive electrode in a discharging operation to produce an intermediate compound of lithium, hydrogen, and oxygen, and the intermediate compound may react with iodine ions (I⁻) and lithium ions (Li⁺) included in the non-aqueous electrolyte in the discharging operation to produce LiOH and a lithium iodine compound.

In some embodiments, the intermediate compound may be LiOOH and the lithium iodine compound may be LiOI. LiOOH may react with the iodine ions (I⁻) and the lithium ions (Li⁺) included in the non-aqueous electrolyte in the discharging operation to produce LiOH and LiOI, as represented by the following reaction formula 1.

[Reaction formula 1] LiOOH + I⁻ + Li⁺ → LiOI + LiOH

In some embodiments, LiOI produced by the reaction formula 1 may react as the following reaction formula 2 in a charging operation to produce LiI and O₂.

[Reaction formula 2] LiOI + LiOI → 2LiI + O₂

In some embodiments, the non-aqueous electrolyte may include an ether-based solvent.

In some embodiments, the non-aqueous electrolyte may include tetraethyleneglycol dimethylether (TEGDME, C₁₀H₂₂O₅), and TEGDME may react as the following reaction formula 3 in the discharging operation to produce LiOOH.

[Reaction formula 3] C₁₀H₂₂O₅ + Li₂O₂ → C₉H₁₈O₄ + CH₃O⁻Li⁺ + LiOOH

In some embodiments, the iodine ions (I⁻) included in the non-aqueous electrolyte may be reduced as the following reaction formula 4 in the charging operation to produce I₂, and I₂ produced by the following reaction formula 4 may react as the following reaction formula 5 in the charging operation to produce I₃⁻.

[Reaction formula 4] I⁻ + I⁻ → I₂ + 2e⁻

[Reaction formula 5] I⁻ + I₂ → I₃⁻

In some embodiments, I₃⁻ produced by the reaction formula 5 may be reduced to I⁻ in the discharging operation, as represented by the following reaction formula 6, and I⁻ produced by the following reaction formula 6 may react with LiOOH and Li⁺ to produce LiOH and LiOI in the discharging operation, as the reaction formula 1.

[Reaction formula 6] I₃⁻ → I⁻ + I₂

In some embodiments, oxygen (O₂) supplied through the positive electrode may react with the iodine ions (I⁻) included in the non-aqueous electrolyte in the discharging operation, as represented by the following reaction formula 7.

[Reaction formula 7] 2O₂ + 2I⁻ → 2O₂⁻ + I₂

In some embodiments, 2O₂⁻ and I₂ produced by the reaction formula 7 may react with each other as the following reaction formula 8 in a charging operation to produce O₂ and I⁻, and I⁻ produced by the following reaction formula 8 reacts with LiOOH and Li⁺ to produce LiOH and LiOI, as the reaction formula 1.

[Reaction formula 8] 2O₂⁻ + I₂ → 2O₂ + 2I⁻

In some embodiments, the discharge product may further include Li₂O₂, and a production amount of LiOH may be more than a production amount of Li₂O₂.

In some embodiments, an oxygen evolution curve according to an increase in battery cycle number may substantially remain constant in a voltage curve according to a specific capacity of the lithium-air battery.

In some embodiments, a concentration of LiI included in the non-aqueous electrolyte may range from 0.1M to 1.5M.

In some embodiments, the positive electrode may include a transition metal oxide.

Embodiments of the inventive concepts may provide a method for manufacturing a lithium-air battery.

In another aspect, a method for manufacturing a lithium-air battery may include adding a lithium salt and lithium iodide (LiI) into a base electrolyte to manufacture a non-aqueous electrolyte, manufacturing a positive electrode including an oxygen (O2) movement path, and after stacking the positive electrode, a separator, and a negative electrode, injecting the non-aqueous electrolyte between the positive electrode and the negative electrode.

In some embodiments, a concentration of LiI in the non-aqueous electrolyte may range from 0.1M to 1.5M.

In some embodiments, the base electrolyte may be an ether-based solvent.

In some embodiments, the base electrolyte may include tetraethyleneglycol dimethylether (TEGDME), triethyleneglycol dimethylether (TriEGDME), diethyleneglycol dimethylether (DEGDME), or dimethoxy ethane (DME).

Embodiments of the inventive concepts may provide a lithium-air battery.

In still another aspect, a lithium-air battery may include a negative electrode including a lithium metal, a positive electrode using oxygen as a positive electrode active material, a non-aqueous electrolyte disposed between the negative electrode and the positive electrode and including lithium iodide (LiI) of 0.1M to 1.5M, and a separator disposed between the positive electrode and the negative electrode.

In some embodiments, lithium hydroxide (LiOH), which is more easily decomposed than Li₂O₂, is produced as a discharge product at the positive electrode.

### EFFECT

According to embodiments of the inventive concepts, the lithium-air battery may be manufactured using the non-aqueous electrolyte into which LiI is added. During the discharging operation of the lithium-air battery according to embodiments of the inventive concepts, at least a portion of Li₂O₂ of the discharge product produced at the positive electrode may be decomposed by iodine ions (I⁻) of LiI included in the non-aqueous electrolyte, thereby producing LiOH. Unlike Li₂O₂, LiOH may be easily decomposed and may not be precipitated on the positive electrode. Thus, it is possible to prevent or inhibit the problem that Li₂O₂ of the discharge product is precipitated on the positive electrode in the conventional lithium-air battery to reduce or deteriorate the charge/discharge efficiency of the conventional lithium-air battery.

### BRIEF DESCRIPTION OF THE DRAWINGS

FIG. 1 is a schematic view illustrating a lithium-air battery according to some embodiments of the inventive concepts.
FIG. 2 is a flow chart illustrating a method for manufacturing a lithium-air battery, according to some embodiments of the inventive concepts.
FIG. 3 illustrates graphs of charge/discharge characteristics of a lithium-air battery according to a comparative example.
FIG. 4 illustrates graphs of charge/discharge characteristics of a lithium-air battery according to a first embodiment.
FIG. 5 illustrates graphs of charge/discharge characteristics of lithium-air batteries according to modified embodiments.
FIG. 6 is a graph illustrating charge/discharge characteristics in a battery cycle limit time (1 hour) of the lithium-air battery according to the first embodiment.
FIG. 7 is a graph illustrating charge/discharge characteristics in a battery cycle limit time (1 hour) of a lithium-air battery according to a first modified embodiment.
FIG. 8 is a graph illustrating charge/discharge characteristics in a battery cycle limit time (1 hour) of a lithium-air battery according to a second modified embodiment.
FIG. 9 is an electrochemical quartz crystal microbalance (EQCM) graph illustrating the first cycle of a lithium-air battery according to a seventh embodiment.
FIG. 10 is an EQCM graph illustrating the second cycle of the lithium-air battery according to the seventh embodiment.
FIG. 11 is a graph illustrating charge/discharge characteristics of the lithium-air battery according to the first embodiment when a battery cycle limit time is 20 hours.
FIG. 12 is an X-ray diffraction (XRD) of the lithium-air battery according to the first embodiment after the lithium-air battery is discharged.
FIG. 13 illustrates scanning electron microscope (SEM) images of positive electrodes of the lithium-air batteries according to the first embodiment and the comparative example before and after the lithium-air batteries are discharged.
FIG. 14 is a graph illustrating charge/discharge characteristics of a lithium-air battery (a concentration of LiI: 0.005M) according to a second embodiment.
FIG. 15 is a graph illustrating charge/discharge characteristics of a lithium-air battery (a concentration of LiI: 0.01M) according to a third embodiment.
FIG. 16 is a graph illustrating charge/discharge characteristics of a lithium-air battery (a concentration of LiI: 0.1M) according to a fourth embodiment.
FIG. 17 is a graph illustrating charge/discharge characteristics of a lithium-air battery (a concentration of LiI: 1.5M) according to a fifth embodiment.
FIG. 18 is a graph illustrating charge/discharge characteristics of a lithium-air battery (a concentration of LiI: 2M) according to a sixth embodiment.
FIG. 19 illustrates graphs of charge/discharge characteristics according to a kind of a conductive structure of a positive electrode of a lithium-air battery according to an eighth embodiment.
FIG. 20 is a schematic block diagram illustrating an electric car including a lithium-air battery according to some embodiments of the inventive concepts.

### DETAILED DESCRIPTION OF THE EMBODIMENTS

The inventive concepts will now be described more fully hereinafter with reference to the accompanying drawings, in which exemplary embodiments of the inventive concepts are shown. It should be noted, however, that the inventive concepts are not limited to the following exemplary embodiments, and may be implemented in various forms. Accordingly, the exemplary embodiments are provided only to disclose the inventive concepts and let those skilled in the art know the category of the inventive concepts.

It will be understood that when an element such as a layer, region or substrate is referred to as being "on" another element, it can be directly on the other element or intervening elements may be present. In addition, in the drawings, the thicknesses of layers and regions are exaggerated for clarity.

It will be also understood that although the terms first, second, third etc. may be used herein to describe various elements, these elements should not be limited by these terms. These terms are only used to distinguish one element from another element. Thus, a first element in some embodiments could be termed a second element in other embodiments without departing from the teachings of the present invention. Exemplary embodiments of aspects of the present inventive concepts explained and illustrated herein include their complementary counterparts. As used herein, the term "and/or" includes any and all combinations of one or more of the associated listed items.

The terminology used herein is for the purpose of describing particular embodiments only and is not intended to limit the invention. As used herein, the singular terms "a", "an" and "the" are intended to include the plural forms as well, unless the context clearly indicates otherwise. It will be further understood that the terms "comprises", "comprising", "includes", "including", "have", "has" and/or "having" when used herein, specify the presence of stated features, integers, steps, operations, elements, and/or components, but do not preclude the presence or addition of one or more other features, integers, steps, operations, elements, components, and/or groups thereof. Furthermore, it will be understood that when an element is referred to as being "connected" or "coupled" to another element, it may be directly connected or coupled to the other element or intervening elements may be present.

In addition, in explanation of the present invention, the descriptions to the elements and functions of related arts may be omitted if they obscure the subjects of the inventive concepts.

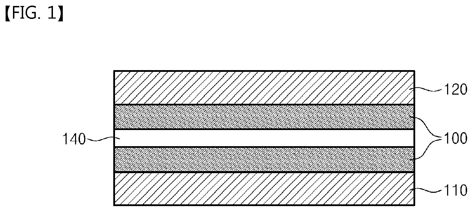

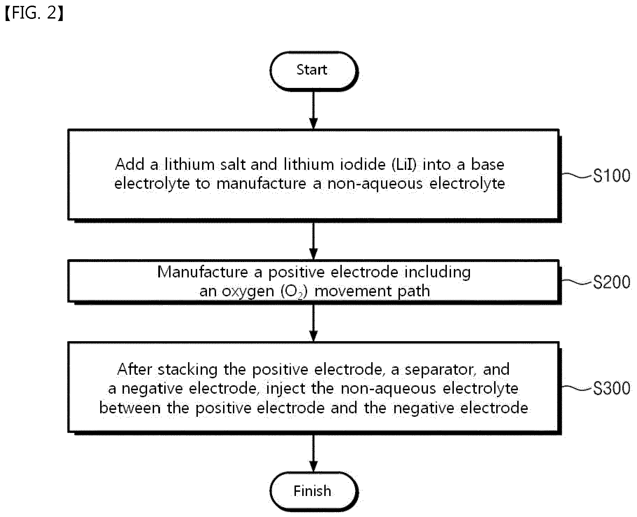

FIG. 1 is a schematic view illustrating a lithium-air battery according to some embodiments of the inventive concepts, and FIG. 2 is a flow chart illustrating a method for manufacturing a lithium-air battery, according to some embodiments of the inventive concepts.

Referring to FIGS. 1 and 2, a lithium-air battery according to some embodiments of the inventive concepts may include a non-aqueous electrolyte 100, a positive electrode 110, a negative electrode 120, and a separator 140.

A lithium salt and lithium iodide (LiI) may be added into a base electrolyte to manufacture the non-aqueous electrolyte 100 (S100). For example, the base electrolyte may include an ether-based solvent. For example, the base electrolyte may include tetraethyleneglycol dimethylether (TEGDME), triethyleneglycol dimethylether (TriEGDME), diethyleneglycol dimethylether (DEGDME), or dimethoxy ethane (DME). For example, the lithium salt may include at least one of LiN(CF₃SO₂)₂, LiN(FSO₂)₂, LiN(C₂F₅SO₂)₂, LiC(CF₂SO₂)₃, LiBF₄, LiPF₆, LiClO₄, LiCF₃SO₃, or LiAsF₆. In some embodiments, the lithium salt and LiI may be added into the base electrolyte of TEGDME to manufacture the non-aqueous electrolyte 100.

In some embodiments, when a concentration of LiI included in the non-aqueous electrolyte 100 ranges from 0.1M to 1.5M, an oxygen evolution curve according to an increase in a charge/discharge cycle number of the battery may remain constant. That the oxygen evolution curve according to the increase in the charge/discharge cycle number remains constant means that the charge/discharge efficiency remains constant even though the charge/discharge cycle number of the lithium-air battery increases. Thus, the charge/discharge efficiency of the lithium-air battery according to some embodiments of the inventive concepts may substantially remain constant even though the charge/discharge cycle number increases.

If the concentration of LiI included in the non-aqueous electrolyte 100 is less than 0.1M, a gradient of the oxygen evolution curve may increase as the charge/discharge cycle number of the lithium-air battery increases. That the gradient of the oxygen evolution curve according to the charge/discharge cycle number of the lithium-air battery increases means that the charge/discharge efficiency of the lithium-air battery is deteriorated according to the increase in the charge/discharge cycle number. If the concentration of LiI included in the non-aqueous electrolyte 100 is greater than 1.5M, the lithium-air battery may not normally operate.

The positive electrode 110 including an oxygen (O₂) movement path may be manufactured (S200). The positive electrode 110 may use oxygen (O₂) as a positive electrode active material. The positive electrode 110 may be formed of a conductive material providing the oxygen (O₂) movement path. For example, the positive electrode 110 may include at least one of a carbon-based material (e.g., carbon black, carbon nanotube, graphene, or carbon fiber), a conductive inorganic material (e.g., molybdenum oxide, molybdenum carbide, or titanium carbide), a conductive polymer material, or a transition metal oxide (e.g., an oxide of at least one transition metal selected from a group consisting of Co, Fe, Mn, Ru, Ir, Ag, Au, Ti, V, Pt, Pd, Rh, Cu, Mo, W, Zr, Zn, Ce, and La).

The negative electrode 120 may include lithium (Li). The negative electrode 120 may be formed of lithium metal or an alloy of lithium and other metal. For example, the negative electrode 120 may include an alloy of lithium and at least one of silicon (Si), aluminum (Al), tin (Sn), magnesium (Mg), indium (In), or vanadium (V).

The separator 140 may be disposed between the positive electrode 110 and the negative electrode 120. For example, the separator 140 may be a porous glass filter. Alternatively, the separator 140 may include at least one of olefin-based resin, fluorine-based resin (e.g., polyvinylidene fluoride or polytetrafluoroethylene), ester-based resin (e.g., polyethylene terephthalate), or cellulose-based non-woven fabric. In certain embodiments, the separator 140 may be formed of at least one of other various kinds of materials except the examples described above.

After the positive electrode 110, the separator 140, and the negative electrode 120 are sequentially stacked, the non-aqueous electrolyte 100 may be injected between the positive electrode 110 and the negative electrode 120 to manufacture the lithium-air battery according to some embodiments of the inventive concepts (S300).

Charging and discharging operations of the lithium-air battery according to some embodiments of the inventive concepts will be described hereinafter.

When the discharging operation of the lithium-air battery according to the inventive concepts is performed, oxygen (O₂) supplied through the positive electrode 110 may react with iodine ions (I⁻) of LiI included in the non-aqueous electrolyte 100, as represented by the following reaction formula 1.

[Reaction formula 1] 2O₂ + 2I⁻ → 2O₂⁻ + I₂

Oxygen ions (O₂⁻) reduced at the positive electrode 110 by the reaction formula 1 may react with lithium ions (Li⁺) oxidized at the negative electrode 120 to produce Li₂O₂ as a discharge product, as represented by the following reaction formula 2. Li₂O₂ of the discharge product is not easily decomposed during the charging operation of the lithium-air battery because of a low electrical conductivity and a high decomposition polarization of Li₂O₂. Li₂O₂ may be precipitated on the positive electrode 110 to reduce or deteriorate the charge/discharge efficiency of the lithium-air battery.

[Reaction formula 2] 2Li⁺ + O₂⁻ → Li₂O₂

However, when the lithium-air battery uses the non-aqueous electrolyte 100 manufactured by adding the lithium salt and LiI into the base electrolyte as described above, Li₂O₂ may be easily decomposed. Thus, LiOH may be produced as the discharge product in addition to Li₂O₂ during the discharging operation of the lithium-air battery.

In more detail, when the non-aqueous electrolyte 100 includes tetraethyleneglycol dimethylether (TEGDME, C₁₀H₂₂O₅) and the discharging operation of the lithium-air battery according to the inventive concepts is performed, the non-aqueous electrolyte 100 may react with lithium ions (Li⁺) and oxygen ions (O₂⁻) at the positive electrode 110 to produce an intermediate compound of lithium, hydrogen, and oxygen, as represented by the following reaction formula 3. When the non-aqueous electrolyte 100 includes TEGDME as described above, the intermediate compound may be LiOOH.

Li₂O₂ participating in the following reaction formula 3 may be Li₂O₂ which corresponds to the discharge product produced by the reaction formula 2. Unlike the above, in the following reaction formula 3, C₁₀H₂₂O₅ may react with lithium ions (2Li⁺) produced from the lithium salt and LiI of the non-aqueous electrolyte 100 and oxygen ions (O₂⁻) produced by the reaction formula 1, thereby producing the intermediate compound.

[Reaction formula 3] C₁₀H₂₂O₅ + Li₂O₂ → C₉H₁₈O₄ + CH₃O⁻Li⁺ + LiOOH

The intermediate compound (LiOOH) produced by the reaction formula 3 may react with iodine ions (I⁻) and lithium ions (Li⁺) of the non-aqueous electrolyte 100 to produce other discharge products (LiOH and a lithium iodine compound) different from the discharge product of Li₂O₂, as represented by the following reaction formula 4. In some embodiments, the lithium iodine compound is LiOI. Iodine ions (I⁻) participating in the following reaction formula 4 may be produced from LiI included in the non-aqueous electrolyte 100. In addition, as described above, lithium ions (Li⁺) participating in the following reaction formula 4 may be produced from Li₂O₂ of the discharge product produced by the reaction formula 2 and the lithium salt and LiI included in the non-aqueous electrolyte 100.

[Reaction formula 4] LiOOH + I⁻ + Li⁺ → LiOI + LiOH

When the lithium-air battery according to some embodiments of the inventive concepts performs the charging operation, LiOI produced by the reaction formula 4 may react as the following reaction formula 5 to produce LiI and O₂. LiI produced by the following reaction formula 5 may be reused to decompose Li₂O₂ of the discharge product produced by the reaction formula 3. O₂ produced by the following reaction formula 5 may be exhausted outward through the oxygen (O₂) movement path of the positive electrode 110.

[Reaction formula 5] LiOI + LiOI → 2LiI + O₂

In addition, iodine ions (I⁻) included in the non-aqueous electrolyte 100 may be reduced as the following reaction formula 6 to produce I₂ during the charging operation of the lithium-air battery. In addition, I₂ produced by the following reaction formula 6 may react as the following reaction formula 7 to produce I₃.

[Reaction formula 6] I⁻+ I⁻ → I₂ + 2e⁻

[Reaction formula 7] I⁻+ I₂ → I₃⁻

I₃ produced by the reaction formulas 6 and 7 may be reduced as the following reaction formula 8 during the discharging operation of the lithium-air battery. I⁻ produced by the following reaction formula 8 may react with LiOOH and Li⁺ as the reaction formula 4 to produce LiOH and LiOI.

[Reaction formula 8] I₃⁻ → I⁻ + I₂

In addition, 2O₂⁻ and I₂ produced by the reaction formula 1 may react with each other as the following reaction formula 9 to produce O₂ and I⁻. I⁻ produced by the following reaction formula 9 may react with LiOOH and Li⁺ as the reaction formula 4 to produce LiOH and LiOI. O₂ produced by the following reaction formula 9 may be exhausted outward through the oxygen (O₂) movement path of the positive electrode 110.

[Reaction formula 9] 2O₂⁻ + I₂ → 2O₂ + 2I⁻

As described above, Li₂O₂ of the discharge product may be produced at the positive electrode 110 during the discharging operation of the lithium-air battery according to some embodiments of the inventive concepts. At least a portion of Li₂O₂ of the discharge product may be decomposed as the reaction formulas 3 and 4 to produce LiOH and LiOI which can be more easily decomposed than Li₂O₂. Thus, a production amount of Li₂O₂ may be reduced. In some embodiments, a production amount of LiOH may be more than the production amount of Li₂O₂ during the discharging operation of the lithium-air battery according to some embodiments of the inventive concepts. As a result, the charge/discharge efficiency of the lithium-air battery according to some embodiments of the inventive concepts may not be reduced or deteriorated but may be substantially uniformly maintained.

Unlike the aforementioned embodiments of the inventive concepts, Li₂O₂ may be produced as a discharge product at a positive electrode during a discharging operation of a conventional lithium-air battery. Li₂O₂ of the discharge product is not easily decomposed during a charging operation of the conventional lithium-air battery because of the low electrical conductivity and the high decomposition polarization of Li₂O₂. Thus, Li₂O₂ may be precipitated on the positive electrode to reduce or deteriorate a charge/discharge efficiency of the conventional lithium-air battery.

However, as described above, the lithium-air battery according to some embodiments of the inventive concepts may include the non-aqueous electrolyte 100 into which LiI is added. During the discharging operation of the lithium-air battery according to some embodiments of the inventive concepts, at least a portion of Li₂O₂ of the discharge product produced at the positive electrode 110 may be decomposed by iodine ions (I⁻) of LiI included in the non-aqueous electrolyte 100, thereby producing LiOH. Unlike Li₂O₂, LiOH may be easily decomposed in the non-aqueous electrolyte 100 but may not be precipitated on the positive electrode 110. Thus, it is possible to prevent or inhibit a problem that Li₂O₂ of the discharge product is precipitated on the positive electrode in the conventional lithium-air battery to reduce or deteriorate the charge/discharge efficiency of the conventional lithium-air battery.

Evaluation results of characteristics of the lithium-air battery according to the aforementioned embodiments of the inventive concepts will be described hereinafter.

### Lithium-air batteries according to Embodiments

Carbon black (super P) and polyvinylidene fluoride (PVDF) were mixed with each other at a weight ratio of 80:20 to form a mixture, and the mixture was dispersed in N-methyl-2-pyrrolidone to manufacture a positive electrode active material layer composition. A current collector of a carbon paper (TGP-H-030, Torray) was coated with the positive electrode active material layer composition, and then, a drying process was performed to manufacture a positive electrode. A lithium-air battery was manufactured using the manufactured positive electrode, a lithium metal foil used as a negative electrode, and a porous filter (Whatman) used as a separator. An oxygen (O₂) movement path was formed at the positive electrode to provide oxygen (O₂) to the positive electrode. A lithium salt (e.g., LiCF₃SO₃) and lithium iodide (LiI) were added to a base electrolyte of tetraethyleneglycol dimethylether (TEGDME) to manufacture an electrolyte solution. Here, a kind and a concentration of the lithium salt and a concentration of the lithium iodide (LiI) were changed to manufacture electrolyte solutions according to various embodiments. Each of the electrolyte solutions was injected between the positive electrode and the negative electrode. The kind and the concentration of the lithium salt and the concentration of the lithium iodide (LiI) are shown in the following table 1.

**[Table 1]**

| Classification | Kind of lithium salt | Concentration (M) of lithium salt | Concentration (M) of LiI | Concentration (M) of I₂ |
|---|---|---|---|---|
| First embodiment | LiCF₃SO₃ | 1 | 1 | 0 |
| Second embodiment | LiCF₃SO₃ | 1 | 0.005 | 0 |
| Third embodiment | LiCF₃SO₃ | 1 | 0.01 | 0 |
| Fourth embodiment | LiCF₃SO₃ | 1 | 0.1 | 0 |
| Fifth embodiment | LiCF₃SO₃ | 1 | 1.5 | 0 |
| Sixth embodiment | LiCF₃SO₃ | 1 | 2 | 0 |
| Seventh embodiment | LiTFSI | 0.2 | 0.01 | 0 |
| Eighth embodiment | LiCF₃SO₃ | 1 | 0.2 | 0 |

### Lithium-air battery according to Comparative example

A lithium-air battery was manufactured by the same method as the lithium-air batteries according to the aforementioned embodiments except an electrolyte. In the comparative example, 1M of LiCF₃SO₃ was added into the base electrolyte of TEGDME to manufacture a non-aqueous electrolyte, and then, the non-aqueous electrolyte was injected between the positive electrode and the negative electrode to manufacture a lithium-air battery.

**[Table 2]**

| Classification | Concentration (M) of LiCF₃SO₃ | Concentration (M) of LiI | Concentration (M) of I₂ |
|---|---|---|---|
| Comparative example | 1 | 0 | 0 |

### Lithium-air batteries according to Modified embodiments

Lithium-air batteries were manufactured by the same method as the lithium-air batteries according to the aforementioned embodiments except an electrolyte. In the modified embodiments, 0.1M of I₂ was added to manufacture non-aqueous electrolytes, and each of the non-aqueous electrolytes was injected between the positive electrode and negative electrode to manufacture a lithium-air battery.

**[Table 3]**

| Classification | Concentration (M) of LiCF₃SO₃ | Concentration (M) of LiI | Concentration (M) of I₂ |
|---|---|---|---|
| First modified embodiment | 1 | 1 | 0.1 |
| Second modified embodiment | 1 | 0 | 0.1 |

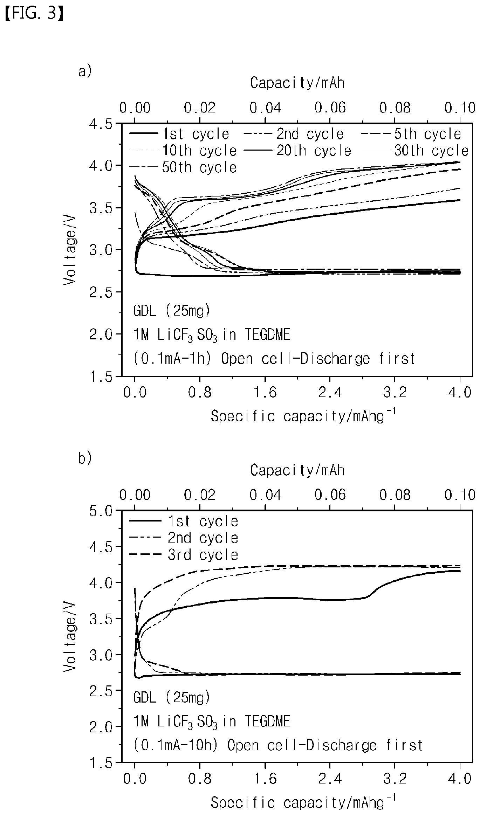

FIG. 3 illustrates graphs of charge/discharge characteristics of a lithium-air battery according to a comparative example. In detail, a graph (a) of FIG. 3 illustrates charge/discharge characteristics in a battery cycle limit time (1 hour) of the lithium-air battery according to the comparative example, and a graph (b) of FIG. 3 illustrates charge/discharge characteristics in a battery cycle limit time (10 hours) of the lithium-air battery according to the comparative example.

After the lithium-air battery according to the comparative example was manufactured, a specific capacity value according to a voltage was measured under a constant current condition of 0.1mA in a state in which a battery cycle time was limited to 1 hour and 10 hours. The specific capacity value was calculated based on a weight including a gas diffusion layer and a positive electrode material of the positive electrode.

Referring to the graphs (a) and (b) of FIG. 3, oxygen reduction curves according to an increase in battery cycle number are not much different from each other. An aspect of Li₂O₂ precipitated on the positive electrode by reduction of oxygen provided to the positive electrode may be derived through the oxygen reduction curve. Through the oxygen reduction curve, it is recognized that the voltage of about 2.7V substantially remains constant regardless of the battery cycle number even though the specific capacity value of the positive electrode increases. An early part of the oxygen reduction curve corresponding to cycles after the first cycle shows voltages between about 2.7V and about 3.0V. This phenomenon may be caused by a reduction reaction of by-products produced by an unclear side reaction.

On the contrary, as shown in an oxygen evolution curve, the gradient of the oxygen evolution curve increases as the battery cycle number increases, and the voltage increases to about 4V as the specific capacity value increases. A variation in potential value required to oxidize and remove Li₂O₂ precipitated on the positive electrode may be derived through the oxygen evolution curve. Thus, it is recognized that the lithium-air battery according to the comparative example needs a high potential value (i.e., a high charging potential value) to remove Li₂O₂ which is precipitated on the positive electrode and which increases as the battery cycle number increases.

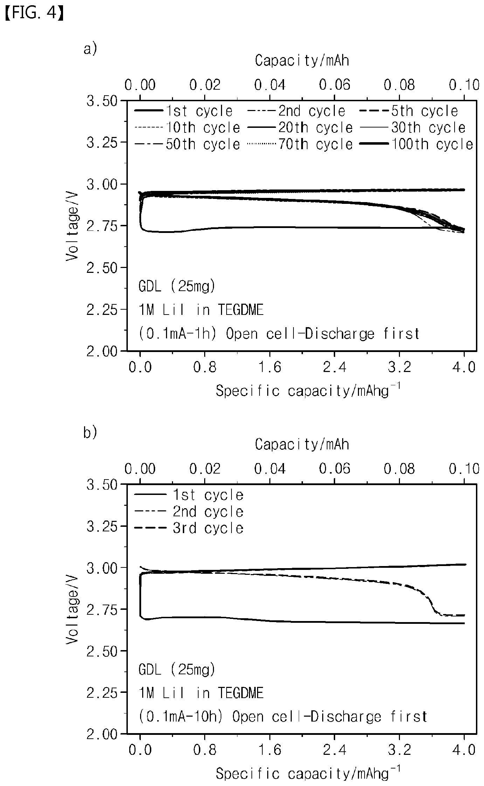

FIG. 4 illustrates graphs of charge/discharge characteristics of a lithium-air battery according to a first embodiment. In detail, a graph (a) of FIG. 4 illustrates charge/discharge characteristics in a battery cycle limit time (1 hour) of the lithium-air battery according to the first embodiment, and a graph (b) of FIG. 4 illustrates charge/discharge characteristics in a battery cycle limit time (10 hours) of the lithium-air battery according to the first embodiment.

After the lithium-air battery according to the first embodiment was manufactured, a specific capacity value according to a voltage was measured in an oxygen atmosphere under a constant current condition of 0.1mA in a state in which a battery cycle time was limited to 1 hour and 10 hours. The specific capacity value was calculated based on a weight including a gas diffusion layer and a positive electrode material of the positive electrode.

Referring to the graphs (a) and (b) of FIG. 4, an oxygen reduction curve corresponding to the first cycle shows a voltage of about 2.75V. The oxygen reduction curve corresponding to cycles after the first cycle shows voltages between about 2.9V and about 2.75V. In addition, an oxygen evolution curve shows a voltage that is substantially uniformly maintained at about 3.0V regardless of a battery cycle number. Thus, it is recognized that a charging potential value required to remove Li₂O₂ precipitated on the positive electrode is substantially uniformly maintained in the lithium-air battery including LiI according to embodiments of the inventive concepts even though the battery cycle number increases.

As shown in the graph (b) of FIG. 4, even though the battery cycle time is limited to 10 hours (i.e., the capacity of the battery is increased by 10 times), the charge/discharge characteristics of the battery is not much different.

As shown in the results of FIGS. 3 and 4, when the lithium-air battery is manufactured using the non-aqueous electrolyte including LiI according to embodiments of the inventive concepts, the charge/discharge characteristics of the lithium-air battery is excellent even though the battery cycle number increases. This may be because Li₂O₂ produced at the positive electrode is decomposed by LiI included in the non-aqueous electrolyte.

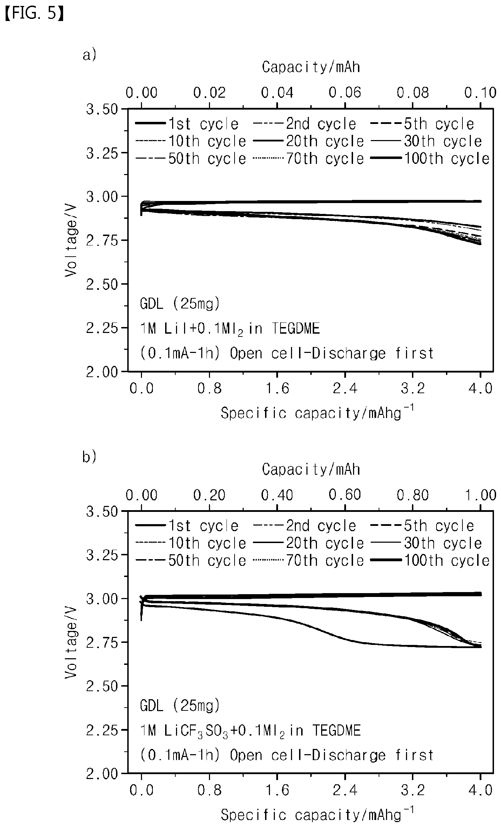

FIG. 5 illustrates graphs of charge/discharge characteristics of lithium-air batteries according to modified embodiments. In detail, a graph (a) of FIG. 5 illustrates charge/discharge characteristics in a battery cycle limit time (1 hour) of the lithium-air battery according to the first modified embodiment, and a graph (b) of FIG. 5 illustrates charge/discharge characteristics in a battery cycle limit time (1 hour) of the lithium-air battery according to the second modified embodiment.

After the lithium-air batteries according to the modified embodiments were manufactured, a specific capacity value according to a voltage of each of the lithium-air batteries was measured in an oxygen atmosphere under a constant current condition of 0.1mA in a state in which a battery cycle time was limited to 1 hour. The specific capacity value was calculated based on a weight including a gas diffusion layer and a positive electrode material of the positive electrode.

Referring to the graph (a) of FIG. 5, an oxygen reduction curve corresponding to the first cycle shows a voltage of about 2.8V or more. In the case in which LiI and I₂ are added into the non-aqueous electrolyte, iodine ions (I⁻) of LiI may react with I₂ to produce I₃, and thus a high potential may be shown in initial discharging. In other words, the lithium-air battery according to the first modified embodiment shows a tendency different from a general non-aqueous lithium-air battery.

Referring to the graph (b) of FIG. 5, the second modified embodiment in which I2 is added into the non-aqueous electrolyte without LiI shows results similar to the results of the graph (a) of FIG. 5. However, the potential in the initial discharging of the lithium-air battery including the non-aqueous electrolyte having both LiI and I₂ is higher than the potential in the initial discharging of the lithium-air battery including the non-aqueous electrolyte having I₂ without LiI.

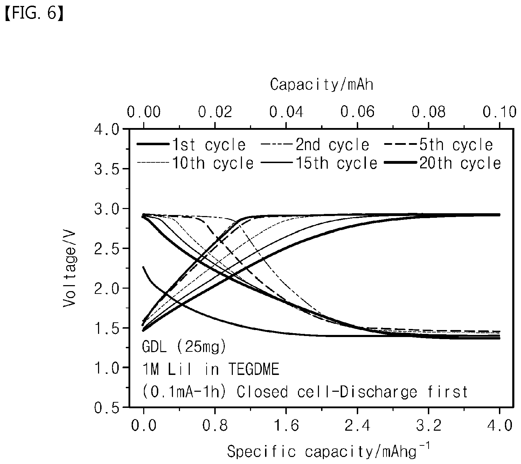

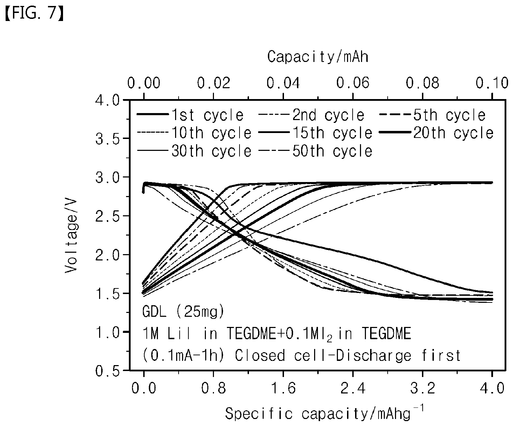

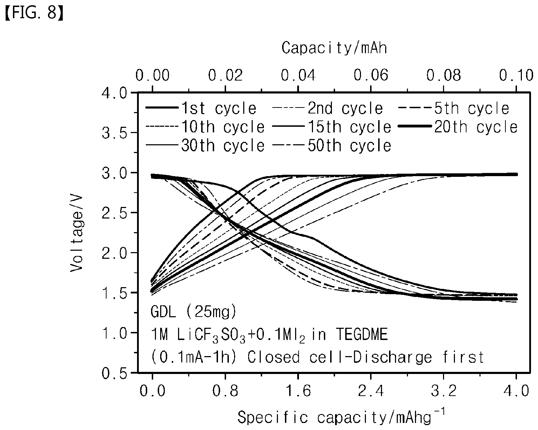

FIGS. 6A, 6B, and 6C are graphs illustrating charge/discharge characteristics of the lithium-air batteries according to the first embodiment and the modified embodiments when oxygen is not supplied. In detail, FIG. 6 is a graph illustrating charge/discharge characteristics in a battery cycle limit time (1 hour) of the lithium-air battery according to the first embodiment, FIG. 7 is a graph illustrating charge/discharge characteristics in a battery cycle limit time (1 hour) of the lithium-air battery according to the first modified embodiment, and FIG. 8 is a graph illustrating charge/discharge characteristics in a battery cycle limit time (1 hour) of the lithium-air battery according to the second modified embodiment.

After the lithium-air batteries according to the first embodiment and the modified embodiments were manufactured, a specific capacity value according to a voltage of each of the lithium-air batteries was measured under a constant current condition of 0.1mA in a state in which oxygen was not supplied and a battery cycle time was limited to 1 hour. The specific capacity value was calculated based on a weight including a gas diffusion layer and a positive electrode material of the positive electrode.

Referring to FIGS. 6, 7, and 8, oxygen reduction curves according to the increase in the battery cycle number are maintained at a voltage of about 3V, and thus charging potential values of FIGS. 6, 7, and 8 are not different from the charging potential values in the oxygen atmosphere of FIGS. 4 and 5. However, as shown in oxygen evolution curves according to the increase in the battery cycle number, discharging potential values are reduced to 1.4V. Thus, it is recognized that oxygen (O₂) is an essential component for operating the lithium-air battery.

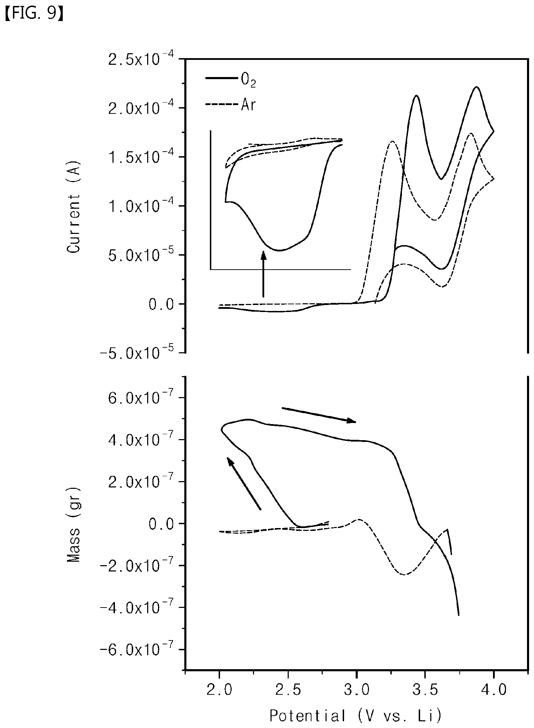

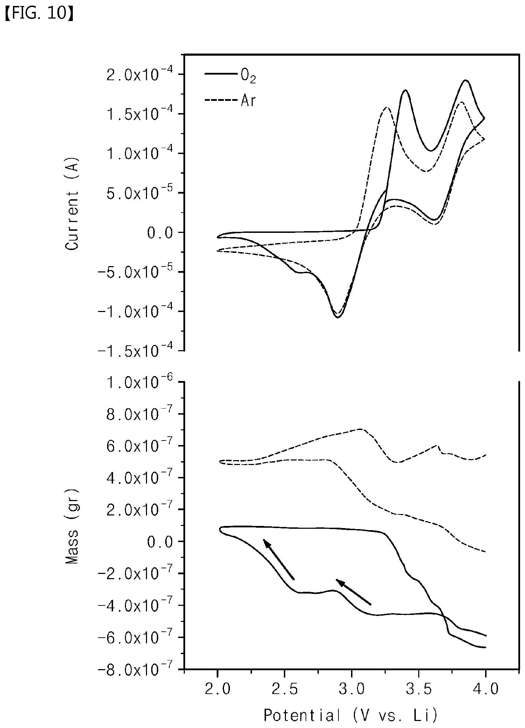

FIGS. 9 and 10 are electrochemical quartz crystal microbalance (EQCM) graphs of the lithium-air battery according to the seventh embodiment. In detail, FIG. 9 is an EQCM graph illustrating the first cycle of the lithium-air battery according to the seventh embodiment, and FIG. 10 is an EQCM graph illustrating the second cycle of the lithium-air battery according to the seventh embodiment.

A variation of a current when a potential was randomly changed was measured using a cyclic voltammetry (CV). In addition, a variation of a mass when the potential was randomly changed was measured.

Referring to FIGS. 9 and 10, through results of a CV graph, it is recognized that a reaction in charging occurs two or more times (two peaks). Thus, the reaction of the seventh embodiment is different from a conventional Li₂O₂ decomposition reaction. In addition, the mass increases in discharging and decreases in charging. In other words, the mass is unbalanced. Thus, changes in chemical and physical characteristics during operation of the lithium-air battery according to the embodiment of the inventive concepts are different from changes in chemical and physical characteristics during operation of a general non-aqueous lithium-air battery.

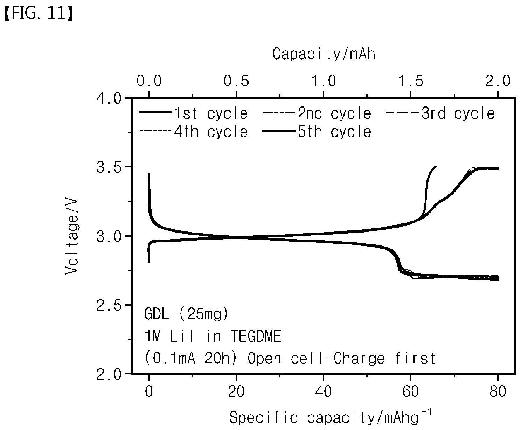

FIG. 11 is a graph illustrating charge/discharge characteristics of the lithium-air battery according to the first embodiment when a battery cycle limit time is 20 hours.

After the lithium-air battery according to the first embodiment was manufactured, a specific capacity value according to a voltage was measured in an oxygen atmosphere under a constant current condition of 0.1mA in a state in which a battery cycle time was limited to 20 hours. The specific capacity value was calculated based on a weight including a gas diffusion layer and a positive electrode material of the positive electrode.

Referring to FIG. 11, when the battery cycle time is limited to 20 hours (i.e., when the battery operates in a state in which the capacity of the battery is increased), there is a limit in the amount of a redox reaction of I3- and the iodine ion (I⁻) of LiI included in the non-aqueous electrolyte. When a discharging operation of a general non-aqueous lithium-air battery is performed, a decomposition reaction occurs by the amount of Li₂O₂ produced at a positive electrode. However, since LiI participates in the reaction in the lithium-air battery using the non-aqueous electrolyte including LiI, an operation result of the battery is varied according to the amount of LiI and a limitation of battery operation occurs when LiI included in the non-aqueous electrolyte is all used.

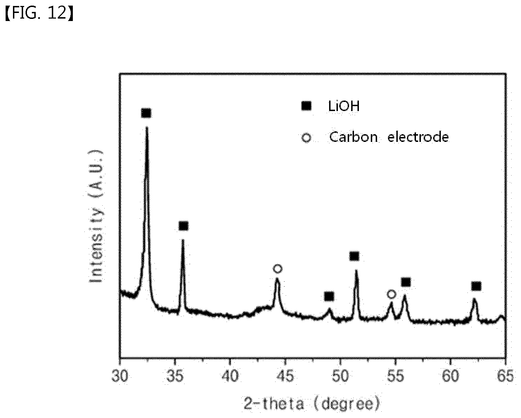

FIG. 12 is an X-ray diffraction (XRD) of the lithium-air battery according to the first embodiment after the lithium-air battery is discharged.

A light-emitting intensity according to X-ray absorption was measured with respect to the positive electrode by an X-ray diffraction (XRD) apparatus after the lithium-air battery according to the first embodiment was discharged.

The graph of FIG. 12 shows a carbon peak corresponding to a carbon element of the carbon paper and/or the carbon black of the positive electrode and a peak corresponding to LiOH. Thus, it is recognized that LiOH, not Li₂O₂, is produced as a reaction product of the positive electrode.

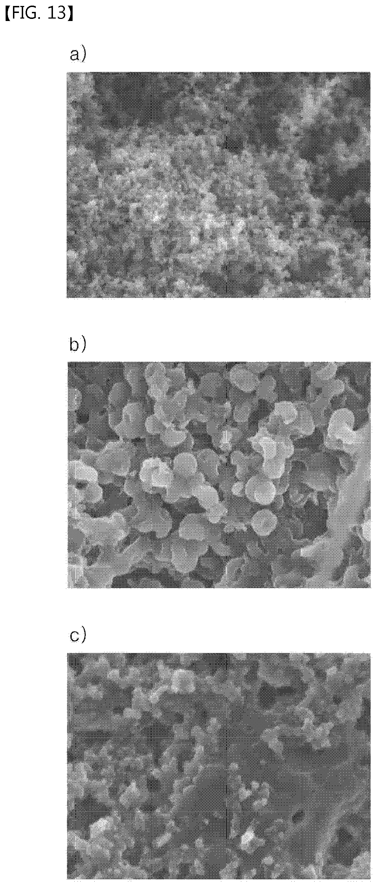

FIG. 13 illustrates scanning electron microscope (SEM) images of positive electrodes of the lithium-air batteries according to the first embodiment and the comparative example before and after the lithium-air batteries are discharged. In detail, a SEM image (a) of FIG. 13 shows the positive electrode before the lithium-air battery according to the first embodiment or the comparative example is discharged, a SEM image (b) of FIG. 13 shows the positive electrode after the lithium-air battery according to the comparative example is discharged one time, and a SEM image (c) of FIG. 13 shows the positive electrode after the lithium-air battery according to the first embodiment is discharged one time.

A surface image of the positive electrode was measured using a SEM apparatus before the lithium-air battery according to the first embodiment or the comparative example was discharged. In addition, a surface image of the positive electrode was measured after each of the lithium-air batteries according to the first embodiment and the comparative example was discharged one time.

As shown in the SEM images (a) and (b) of FIG. 13, a donut shape is shown at the surface of the positive electrode after the lithium-air battery according to the comparative example is discharged one time. The donut shape corresponds to a characteristic structure of Li₂O₂. Thus, it is recognized that Li₂O₂ is produced and precipitated on the surface of the positive electrode during the discharging operation of the lithium-air battery according to the comparative example.

As shown in the SEM images (a) and (c) of FIG. 13, a distinct shape is not shown at the surface of the positive electrode after the lithium-air battery according to the first embodiment is discharged one time.

As shown in FIG. 13, the surface shape of the positive electrode of the lithium-air battery according to the first embodiment is different from the surface of the positive electrode of the lithium-air battery according to the comparative example after each of the lithium-air batteries is discharged one time. Thus, a product material produced at the positive electrode of the lithium-air battery according to the first embodiment is different from a product material produced at the positive electrode of the lithium-air battery according to the comparative example. As a result, Li₂O₂ is produced as the reaction product on the positive electrode of the lithium-air battery according to the comparative example during the discharging operation, but LiOH is produced as the reaction product on the positive electrode of the lithium-air battery according to the first embodiment during the discharging operation.

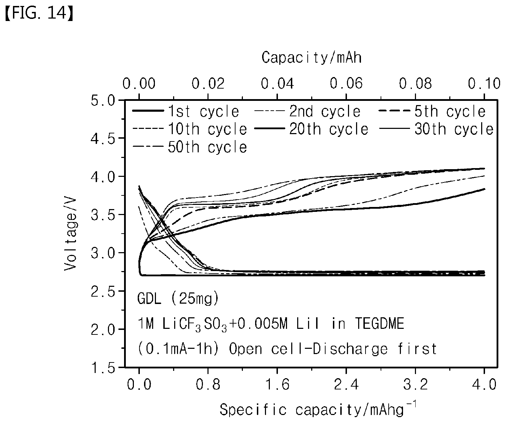

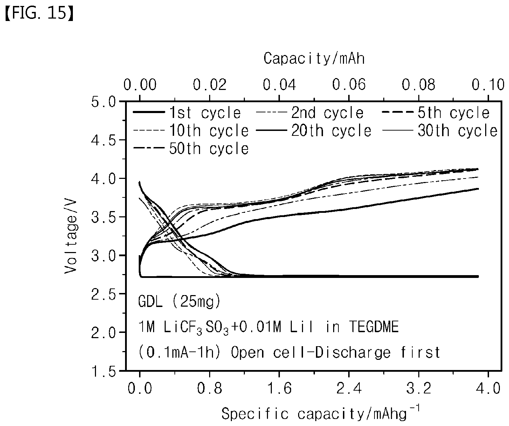

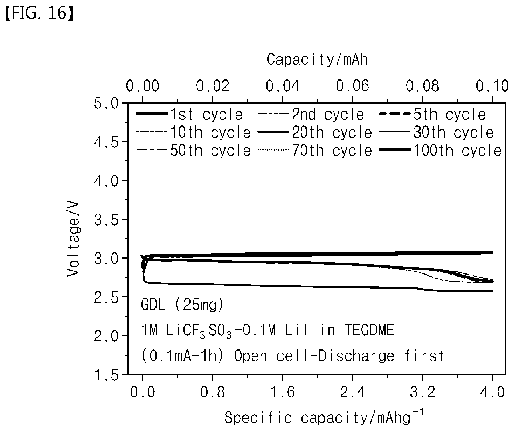

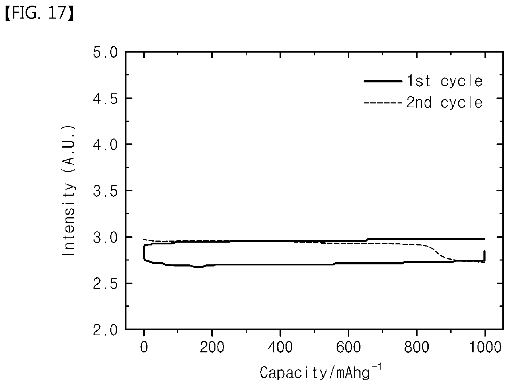

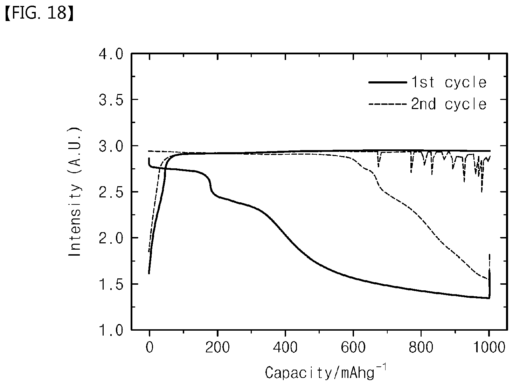

FIGS. 14, 15, 16, 17, and 18 are graphs illustrating charge/discharge characteristics according to the concentration of LiI included in the non-aqueous electrolyte of the lithium-air battery according to embodiments of the inventive concepts. In detail, FIG. 14 is a graph illustrating charge/discharge characteristics of a lithium-air battery (a concentration of LiI: 0.005M) according to a second embodiment, and FIG. 15 is a graph illustrating charge/discharge characteristics of a lithium-air battery (a concentration of LiI: 0.01M) according to a third embodiment. FIG. 16 is a graph illustrating charge/discharge characteristics of a lithium-air battery (a concentration of LiI: 0.1M) according to a fourth embodiment, and FIG. 17 is a graph illustrating charge/discharge characteristics of a lithium-air battery (a concentration of LiI: 1.5M) according to a fifth embodiment. FIG. 18 is a graph illustrating charge/discharge characteristics of a lithium-air battery (a concentration of LiI: 2M) according to a sixth embodiment.

After the lithium-air batteries according to the embodiments were manufactured, a specific capacity value according to a voltage of each of the lithium-air batteries was measured in an oxygen atmosphere under a constant current condition of 0.1mA in a state in which a battery cycle time was limited to 1 hour. The specific capacity value was calculated based on a weight including a gas diffusion layer and a positive electrode material of the positive electrode.

Referring to FIGS. 14, 15, 16, 17, and 18, the oxygen evolution curve according to the increase in the battery cycle number substantially remains constant when the concentration of LiI included in the non-aqueous electrolyte ranges from 0.1M to 1.5M. Thus, the charge/discharge efficiency according to the increase in the battery cycle number of the lithium-air battery according to the embodiments of the inventive concepts can be uniformly maintained. If the concentration of LiI included in the non-aqueous electrolyte is less than 0.1M, the gradient of the oxygen evolution curve increases as the battery cycle number of the lithium-air battery increases. Thus, the charge/discharge efficiency according to the increase in the cycle number of the lithium-air battery is deteriorated. In addition, if the concentration of LiI included in the non-aqueous electrolyte is greater than 1.5M, it is difficult for the lithium-air battery to operate normally.

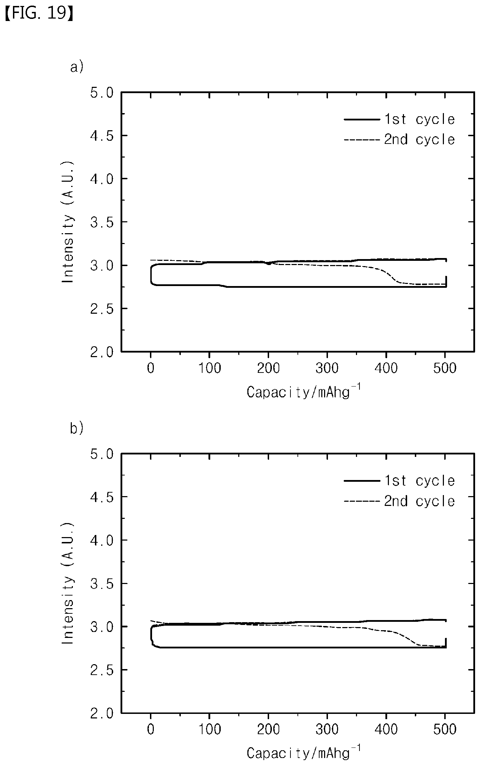

FIG. 19 illustrates graphs of charge/discharge characteristics according to a kind of a conductive structure of a positive electrode of a lithium-air battery according to an eighth embodiment. In detail, a graph (a) of FIG. 19 shows the charge/discharge characteristics of the lithium-air battery according to the eighth embodiment when the conductive structure of the positive electrode is formed of carbon black, and a graph (b) of FIG. 19 shows the charge/discharge characteristics of the lithium-air battery according to the eighth embodiment when the conductive structure of the positive electrode is formed of a transition metal oxide (TiO₂).

When the lithium-air batteries according to the eighth embodiment were manufactured, the conductive structures of the positive electrodes were formed of materials (i.e., the carbon black and the transition metal oxide) different from each other. A specific capacity value according to a voltage of each of the lithium-air batteries was measured in an oxygen atmosphere under a constant current condition of 0.1mA in a state in which a battery cycle time was limited to 1 hour. The specific capacity value was calculated based on a weight including a gas diffusion layer and a positive electrode material of the positive electrode.

Referring to the graphs (a) and (b) of FIG. 19, the charge/discharge characteristics of the lithium-air battery including the positive electrode having the conductive structure formed of the transition metal oxide (TiO₂) is similar to the charge/discharge characteristics of the lithium-air battery including the positive electrode having the conductive structure formed of a carbon material (carbon black). Thus, the transition metal oxide can be used as a material of the conductive structure of the positive electrode of the lithium-air battery according to embodiments of the inventive concepts.

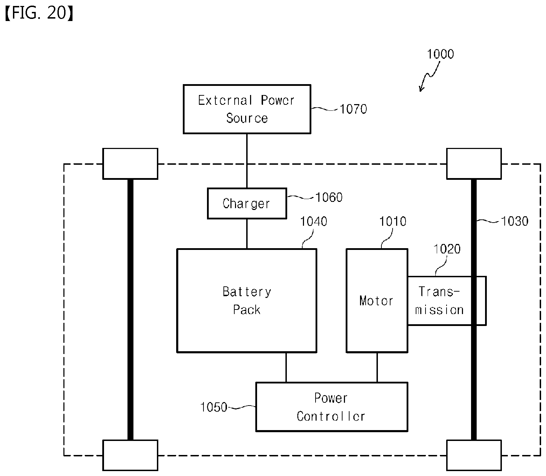

FIG. 20 is a schematic block diagram illustrating an electric car including a lithium-air battery according to some embodiments of the inventive concepts.

Referring to FIG. 20, a secondary battery electric car 1000 to which the lithium-air battery according to embodiments of the inventive concepts is applied may include a motor 1010, a transmission 1020, an axle 1030, a battery pack 1040, and at least one of a power controller 1050 or a charger 1060.

The motor 1010 may convert electric energy of the battery pack 1040 into kinetic energy. The motor 1010 may provide the converted kinetic energy to the axle 1030 through the transmission 1020. The motor 1010 may include a single motor or a plurality of motors. For example, when the motor 1010 includes the plurality of motors, the motor 1010 may include a front motor supplying the kinetic energy to a front axle and a rear motor supplying the kinetic energy to a rear axle.

The transmission 1020 may be located between the motor 1010 and the axle 1030. The transmission 1020 may change the kinetic energy provided from the motor 1010 to meet a driving environment desired by a driver and may provide the changed kinetic energy to the axle 1030.

The battery pack 1040 may store electric energy provided from the charger 1060 and may provide the stored electric energy to the motor 1010. The battery pack 1040 may directly provide the electric energy to the motor 1010 and/or may provide the electric energy to the motor 1010 through the power controller 1050.

At this time, the battery pack 1040 may include at least one battery cell. In addition, the battery cell may include the lithium-air battery according to the aforementioned embodiments of the inventive concepts. However, embodiments of the inventive concepts are not limited thereto. In certain embodiments, the battery cell may further include at least one of other various kinds of secondary batteries. Meanwhile, the battery cell may mean an individual battery, and/or the battery pack may mean a battery cell assembly in which battery cells are connected to each other to meet desired voltage and/or capacity.

The power controller 1050 may control the battery pack 1040. In other words, the power controller 1050 may control the batter pack 1040 to allow the power transmitted from the battery pack 1040 to the motor 1010 to have desired voltage, current and/or waveform. To achieve this, the power controller 1050 may include at least one of a passive power device or an active power device.

The charger 1060 may receive power from an external power source 1070 and may provide the power to the battery pack 1040. The charger 1060 may entirely control a charging state. For example, the charger 1060 may control on/off of charging and a charging rate.

As described above, the lithium-air battery according to embodiments of the inventive concepts may include the non-aqueous electrolyte into which LiI is added. During the discharging operation of the lithium-air battery according to embodiments of the inventive concepts, at least a portion of Li₂O₂ of the discharge product produced at the positive electrode may be decomposed by iodine ions (I⁻) of LiI included in the non-aqueous electrolyte, thereby producing LiOH corresponding to another discharge product. Unlike Li₂O₂, LiOH may be easily decomposed in the non-aqueous electrolyte and may not be precipitated on the positive electrode. The production amount of LiOH may be more than the amount of Li₂O₂ which is not decomposed by iodine ions of the non-aqueous electrolyte but remains, and thus it is possible to reduce or solve the problem that Li₂O₂ of the discharge product is precipitated on the positive electrode in the conventional lithium-air battery to reduce or deteriorate the charge/discharge efficiency of the conventional lithium-air battery.

The lithium-air battery according to embodiments of the inventive concepts may have the excellent charge/discharge efficiency and lifetime characteristics by the non-aqueous electrolyte including LiI, as compared with a conventional lithium-air battery. Thus, the lithium-air battery according to embodiments of the inventive concepts may be used in electric cars, middle and large-sized energy storage devices, and electronic devices requiring small, light and environment-friendly characteristics.

While the inventive concepts have been described with reference to exemplary embodiments, it will be apparent to those skilled in the art that various changes and modifications may be made without departing from the spirits and scopes of the inventive concepts. Therefore, it should be understood that the above embodiments are not limiting, but illustrative. Thus, the scopes of the inventive concepts are to be determined by the broadest permissible interpretation of the following claims and their equivalents, and shall not be restricted or limited by the foregoing description.

## Claims

1. A lithium-air battery comprising:
a negative electrode including a lithium metal;
a positive electrode using oxygen as a positive electrode active material;
a non-aqueous electrolyte disposed between the negative electrode and the positive electrode, the non-aqueous electrolyte including lithium iodide (LiI); and
a separator disposed between the positive electrode and the negative electrode,
wherein lithium hydroxide (LiOH) is produced as a discharge product at the positive electrode by iodine (I) of LiI included in the non-aqueous electrolyte.

2. The lithium-air battery of claim 1, wherein the non-aqueous electrolyte reacts with lithium ions (Li⁺) at the positive electrode in a discharging operation to produce an intermediate compound of lithium, hydrogen, and oxygen, and
wherein the intermediate compound reacts with iodine ions (I⁻) and lithium ions (Li⁺) included in the non-aqueous electrolyte in the discharging operation to produce LiOH and a lithium iodine compound.

3. The lithium-air battery of claim 2, wherein the intermediate compound is LiOOH and the lithium iodine compound is LiOI,
wherein LiOOH reacts with the iodine ions (I⁻) and the lithium ions (Li⁺) included in the non-aqueous electrolyte in the discharging operation to produce LiOH and LiOI, as represented by the following reaction formula 1,
[Reaction formula 1] LiOOH + I⁻ + Li⁺ → LiOI + LiOH.

4. The lithium-air battery of claim 3, wherein LiOI produced by the reaction formula 1 reacts as the following reaction formula 2 in a charging operation to produce LiI and O₂,
[Reaction formula 2] LiOI + LiOI → 2LiI + O₂.

5. The lithium-air battery of claim 3, wherein the non-aqueous electrolyte includes an ether-based solvent.

6. The lithium-air battery of claim 5, wherein the non-aqueous electrolyte includes tetraethyleneglycol dimethylether (TEGDME, C₁₀H₂₂O₅),
wherein TEGDME reacts as the following reaction formula 3 in the discharging operation to produce LiOOH,
[Reaction formula 3] C₁₀H₂₂O₅ + Li₂O₂ → C₉H₁₈O₄ + CH₃O⁻Li⁺ + LiOOH.

7. The lithium-air battery of claim 3, wherein the iodine ions (I⁻) included in the non-aqueous electrolyte are reduced as the following reaction formula 4 in the charging operation to produce I₂,
wherein I₂ produced by the following reaction formula 4 reacts as the following reaction formula 5 in the charging operation to produce I₃⁻,
[Reaction formula 4] I⁻+I⁻ → I₂+2e⁻
[Reaction formula 5] I⁻ + I₂ → I₃⁻.

8. The lithium-air battery of claim 7, wherein I₃⁻ produced by the reaction formula 5 is reduced to I⁻ in the discharging operation, as represented by the following reaction formula 6,
wherein I⁻ produced by the following reaction formula 6 reacts with LiOOH and Li⁺ to produce LiOH and LiOI in the discharging operation, as the reaction formula 1,
[Reaction formula 6] I₃⁻ → I⁻ + I₂.

9. The lithium-air battery of claim 3, wherein oxygen (O₂) supplied through the positive electrode reacts with the iodine ions (I⁻) included in the non-aqueous electrolyte in the discharging operation, as represented by the following reaction formula 7,
[Reaction formula 7] 2O₂ + 2I⁻ → 2O₂⁻ + I₂.

10. The lithium-air battery of claim 9, wherein 2O₂⁻ and I₂ produced by the reaction formula 7 react with each other as the following reaction formula 8 in a charging operation to produce O₂ and I⁻,
wherein I⁻ produced by the following reaction formula 8 reacts with LiOOH and Li⁺ to produce LiOH and LiOI, as the reaction formula 1,
[Reaction formula 8] 2O₂⁻ + I₂ → 2O₂ + 2I⁻.

11. The lithium-air battery of claim 1, wherein the discharge product further includes Li₂O₂, and
wherein a production amount of LiOH is more than a production amount of Li₂O₂.

12. The lithium-air battery of claim 1, wherein an oxygen evolution curve according to an increase in battery cycle number substantially remains constant in a voltage curve according to a specific capacity of the lithium-air battery.

13. The lithium-air battery of claim 1, wherein a concentration of LiI included in the non-aqueous electrolyte ranges from 0.1M to 1.5M.

14. The lithium-air battery of claim 1, wherein the positive electrode includes a transition metal oxide.

15. A method for manufacturing a lithium-air battery, the method comprising:
adding a lithium salt and lithium iodide (LiI) into a base electrolyte to manufacture a non-aqueous electrolyte;
manufacturing a positive electrode including an oxygen (O2) movement path; and
after stacking the positive electrode, a separator, and a negative electrode, injecting the non-aqueous electrolyte between the positive electrode and the negative electrode.

16. The method of claim 15, wherein a concentration of LiI in the non-aqueous electrolyte ranges from 0.1M to 1.5M.

17. The method of claim 15, wherein the base electrolyte is an ether-based solvent.

18. The method of claim 17, wherein the base electrolyte includes tetraethyleneglycol dimethylether (TEGDME), triethyleneglycol dimethylether (TriEGDME), diethyleneglycol dimethylether (DEGDME), or dimethoxy ethane (DME).

19. A lithium-air battery comprising:
a negative electrode including a lithium metal;
a positive electrode using oxygen as a positive electrode active material;
a non-aqueous electrolyte disposed between the negative electrode and the positive electrode, the non-aqueous electrolyte including lithium iodide (LiI) of 0.1M to 1.5M; and
a separator disposed between the positive electrode and the negative electrode.

20. The lithium-air battery of claim 19, wherein lithium hydroxide (LiOH), which is more easily decomposed than Li₂O₂, is produced as a discharge product at the positive electrode.
